# EUROPEAN PATENT SPECIFICATION

(11) **EP 4 212 010 B1**
(45) Date of publication and mention of the grant of the patent: **17.07.2024**
(21) Application number: 22212059.4
(22) Date of filing: 07.12.2022
(51) Int. Cl.: A01G 13/06

(54) **ANTI-FROST DEVICE**
FROSTSCHUTZVORRICHTUNG
DISPOSITIF ANTIGEL

(30) Priority: 10.01.2022 IT 202200000248
(43) Date of publication of application: 19.07.2023
(73) Proprietor: De Mitri, Raffaele, 47521 Cesena (FC) (IT)
(72) Inventor: De Mitri, Raffaele, 47521 Cesena (FC) (IT)
(74) Representative: Benetazzo, Flavia

(56) References cited:
- DE-A1- 2 228 158
- US-A- 1 363 720
- US-A- 2 164 011
- US-A1- 2007 220 807

## Description

The present industrial invention patent application concerns an anti-frost and anti-ice device for preventing damage caused to plants by frost and/or ice. In particular, the anti-frost device according to the invention is suitable to be used especially during the flowering period of fruit trees, in prestige vineyards and other to prevent damage caused by frost and/or ice.

Different types of anti-frost device are known, which have to be positioned between the rows of plants, so as to heat the surrounding air and prevent frost damage.

A first type of anti-frost device comprises a diesel burner to generate hot air and a turbine to circulate the hot air towards the plants. The diesel burner and the turbine are connected to a tractor, so as to be moved by the tractor. Furthermore, the turbine is powered by a power take off of the tractor.

A second type of anti-frost device comprises an anti-frost candle comprising a metal container containing paraffin wax. When the candle is lit, hot air is generated that protects the plants from the frost.

A third type of anti-frost device comprises a stove powered for example by gas, pellets, diesel, oil, etc. The stove, positioned between the rows of plants, heats the surrounding air, preventing frost damage.

The known anti-frost devices have significant drawbacks.

A first drawback consists in the fact that said anti-frost devices have high production and purchase costs and require skilled personnel for correct operation.

A second drawback consists in the fact that a qualified operator is needed to manually switch the anti-frost device on and ensure its correct operation. The fact that the anti-frost device is usually used at night should also be taken into account. Therefore, said anti-frost devices entail high labour costs, due to the fact that the operator has to work at night, and they are not practical to use.

The anti-frost devices are usually arranged in the space between two rows of plants. A third drawback consists in the fact that said anti-frost devices are bulky and have to be moved whenever it is necessary to clear the space between the two rows of plants, for example when carrying out pesticide treatments.

A fourth drawback consists in the fact that often said known anti-frost devices use polluting fuels to produce the hot air. In this way, in addition to producing pollution, the known anti-frost devices cannot be used to heat organic crops.

DE2228158 describes a ground heating device, in particular for vineyards and the like, comprising a heating device, such as a burner.

US1363720 describes a nozzle for an orchard heater, which can be adjusted in various positions.

US2007220807 describes a method for avoiding frost damage in crops and/or for improving fruit production at low temperatures.

US2164011 describes a heating system for orchards in which the heat is conveyed by means of deflectors to each fruit tree.

The object of the present invention is to overcome the drawbacks of the known art, providing an anti-frost device that is inexpensive to produce, has reduced labour costs and is practical to use.

A further object is to provide an anti-frost device that is not bulky and does not occupy too much space behind the rows of plants.

A further object is to provide an anti-frost device which has a reduced environmental impact and can also be used for organic crops.

Said objects are achieved in accordance with the invention with the characteristics listed in the attached independent claim 1.

Advantageous embodiments appear from the dependent claims.

The anti-frost device according to the invention is defined by claim 1.

The advantages of the anti-frost device according to the invention are evident: thanks to the holes in the pipe, the heated gas flowing out of the holes can heat the plants of the row of plants, so as to avoid the formation of frost on the plants. The holes are formed in the pipe corresponding to the plants, so as to direct the heated gas directly onto the plants.

Due to the fact that it comprises at least one burner and at least one pipe, suitable to be arranged along said at least one row of plants, the anti-frost device is inexpensive, simple to construct and produce, and has reduced overall dimensions. In this way, it is possible to permanently install the anti-frost device in the area of the row of plants, without the anti-frost device obstructing the space behind the row of plants.

Thanks to the longitudinal dividing wall of said at least one pipe, the heated gas can be made to flow towards the second end of said at least one pipe, so that the heated gas flows firstly out of the holes at the end of the row of plants distal to said at least one burner, and then flows towards the end of the row of plants proximal to said at least one burner. Furthermore, the lateral wall and the dividing wall of said at least one pipe are heated by the heated gas, contributing to preventing the formation of frost and/or ice along the row of plants.

For greater clarity, the description of the anti-frost device according to the invention continues with reference to the attached drawings, which have only a nonlimiting illustrative purpose, wherein:
- Fig. 1 is a lateral view of a first embodiment of the anti-frost device according to the invention;
- Fig. 2 is a section of a pipe of the anti-frost device of Fig. 1 taken along a vertical plane passing through the longitudinal axis of the pipe;
- Fig. 3 is an axonometric view of an apparatus comprising a plurality of anti-frost devices of Fig. 1, each installed in the area of a row of plants;
- Fig. 4 is a lateral view of a second embodiment of the anti-frost device according to the invention, installed in the area of a row of plants;
- Fig. 5 is an axonometric view of a variation of the anti-frost device of Fig. 4, installed in the area of a plurality of rows of plants.

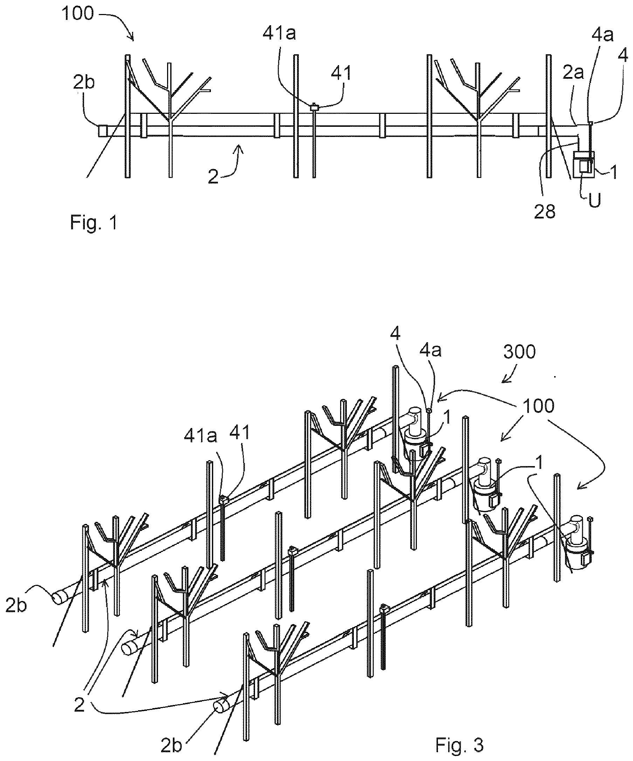

With reference to Fig. 1 a first embodiment of the anti-frost device according to the invention is described, indicated overall by the reference number 100.

The anti-frost device (100) is suitable to be installed in the area of a row of plants to prevent damage caused by frost and/or ice on said plants.

The anti-frost device (100) comprises a burner (1), advantageously arranged at the head of the row of plants. Advantageously, the burner (1) is powered by gas, preferably LPG. The burner (1) is suitable for generating heated gas, advantageously comprising carbon dioxide and water vapour. More precisely, the burner (1) causes combustion of the LPG, taken from a cylinder connected to the burner (1), and of the air, taken from the outside. This combustion generates the heated gas, comprising carbon dioxide and water vapour.

The anti-frost device (100) comprises a horizontal pipe (2), suitable to be arranged along the row of plants. The pipe (2) is raised from the ground. For example, the pipe (2) is connected to wires present along the row of plants and designed to support irrigation pipes. Advantageously, the pipe (2) or at least a portion of the pipe (2) proximal to the burner (1) is made of a material resistant to high temperatures, for example metal. Optionally, a portion of the pipe (2) distal to the burner (1) can be made of plastic.

The pipe (2) comprises a first end (2a) proximal to the burner (1) and second closed end (2b) distal to the burner (1). Advantageously, the first end (2a) and the second end (2b) of the pipe are suitable to be arranged corresponding to the ends of the row of plants.

The pipe (2) is in fluid communication with the burner (1), so that the heated gas generated by the burner (1) flows into the pipe (2). Optionally, a connection pipe (28) comprising a vertical portion is arranged between the burner (1) and the pipe (2) and is in fluid communication with the burner (1) and the pipe (2), so that the heated gas, generated by the burner (1), flows into the connection pipe (28) and then into the horizontal pipe (2).

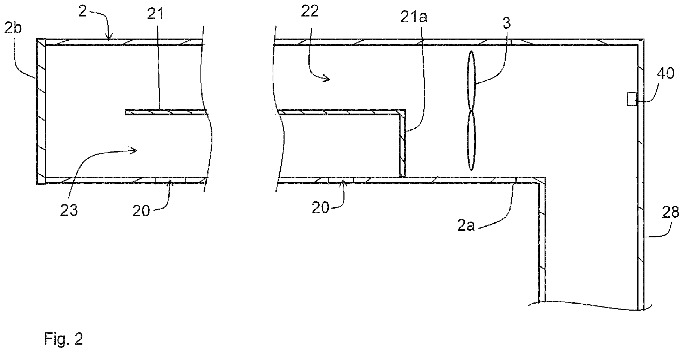

Optionally, the anti-frost device (100) comprises one or more fans (3) (Fig. 2) arranged in the pipe (2) to push the heated gas along the pipe (2).

With reference also to Fig. 2, the pipe (2) comprises holes (20) for outflow of the heated gas from the pipe (2). The holes (20) are formed along a lateral wall of the pipe (2) and open onto the outside of the pipe (2). Each hole (20) is suitable to be arranged corresponding to a plant of the row of plants, so that the heated gas flowing in the pipe (2) flows out of the pipe (2) through the holes (20) corresponding to the plants of the row of plants.

In this way, the heated gas that flows out of the holes (20) heats the plants of the row of plants so as to avoid the formation of frost and/or ice on the plants. The holes (20) are formed in the pipe corresponding to the plants so as to direct the heated gas directly onto the plants.

Optionally, the holes (20) are slotted and the anti-frost device (100) comprises an insect net arranged on the holes (20) of the pipe to prevent insects entering the pipe (2) through the holes (20).

The pipe (2) comprises a longitudinal dividing wall (21) arranged in a horizontal position so that the pipe (2) comprises a first conduit (22) and a second conduit (23). Optionally, the dividing wall (21) rests on through screws (not shown in the figure), assembled in the pipe (2) in a horizontal position. Advantageously, the second conduit (23) is arranged below the first conduit (22). The holes (20) are formed corresponding to the second conduit (23) in a lower portion of a lateral wall of the pipe (2) so that the heated gas flows out from the bottom. More precisely, the heated gas fills the second conduit (23) of the pipe and flows out of the holes (20) formed corresponding to the second conduit (23) in a lower portion of the lateral wall of the pipe (2). The second conduit (23) is closed by means of a bulkhead (21a) at the first end (2a) of the pipe and communicates with the first conduit (22) at the second end (2b) of the pipe, so that the heated gas flowing out of the burner (1) is forced to flow into the first conduit (22) until it reaches the second end (2b) of the pipe, enters the second conduit (23) and flows downwards out of the holes (20) of the pipe. The heated gas which has flowed out of the holes (20) rises upwards, thus heating the plant.

The fact that the holes (20) are formed in a lower portion of the lateral wall of the pipe (2) is particularly advantageous in the case of vineyards and low bushes. Furthermore, the fact that the holes (20) are formed in a lower portion of the lateral wall of the pipe (2) means that the rainwater cannot enter the pipe (2) through the holes (20).

Optionally, the bulkhead (21a) is in a single piece with the dividing wall (21). Advantageously, the dividing wall (21) is made of a material resistant to high temperatures, for example sheet metal.

Thanks to the dividing wall (21), it is possible to direct the heated gas towards the second end of the pipe so that the heated gas flows firstly out of the holes at the end of the row of plants distal to the burner (1) and then towards the end of the row of plants proximal to the burner (1). Furthermore, the lateral wall and the dividing wall (21) of the pipe are heated by the heated gas, helping to prevent the formation of frost and/or ice along the row of plants.

Advantageously, the anti-frost device (100) comprises:
- an external thermometer (4) arranged in the area of the burner (1), at the head of the row of plants, and suitable for detecting the temperature of the air in the area of the row of plants;
- an external hygrometer (4a) arranged in the area of the burner (1), at the head of the row of plants, and suitable for detecting the humidity of the air in the area of said at least one row of plants; optionally, the external thermometer (4) and the external hygrometer (4a) are arranged within the same device;
- an ignition device of the burner (1) to switch the burner (1) on;
- a thermocouple (40) advantageously arranged inside the connection pipe (28) so as to detect the temperature of the heated gas;
- a control unit (U), advantageously arranged outside the burner (1).

The control unit (U) is connected to the external thermometer (4) so as to receive from the external thermometer (4) information on the temperature of the air in the area of the row of plants. The control unit (U) is connected to the external hygrometer (4a) so as to receive from the external hygrometer (4a) information on the humidity of the air in the area of the row of plants.

The control unit (U) is connected to the ignition device of the burner (1) so as to send to the ignition device an activation signal when the air temperature in the area of the row of plants, detected by the external thermometer (4), is below a threshold value, stored in the control unit (U), and when the humidity of the air in the area of the row of plants, detected by said external hygrometer (4a), is below a threshold value, stored in the control unit (U).

The control unit (U) is connected to the thermocouple (40) to receive from the thermocouple (40) information on the temperature of the heated gas flowing out of the burner (1). If the temperature of the heated gas is below a threshold value, stored in the control unit (U), the control unit (U) sends a signal to the burner (1) to draw a larger quantity of LPG from the cylinder.

Furthermore, the thermocouple (40) can check that the burner (1) is actually switched on.

Alternatively, the thermocouple (40) can be arranged in the pipe (2) or in the burner (1).

Advantageously, the control unit (U) comprises a rechargeable battery to electrically power said control unit (U).

Optionally, the anti-frost device (100) comprises, in addition to the external thermometer (4), the external hygrometer (4a) and the thermocouple (40), one or more of the following further sensors:
- a secondary thermometer (41) arranged in a different position from the external thermometer (4), for example halfway along the row of plants or at the end of the row of plants, and suitable for detecting the temperature of the air along the row of plants in a different position from the external thermometer (4);
- a secondary hygrometer (41a) arranged in a different position from the external hygrometer, for example halfway along the row of plants or at the end of the row of plants, and suitable for detecting the humidity of the air along the row of plants in a different position from the external hygrometer (4a); optionally, the secondary thermometer (41) and the secondary hygrometer (41a) are arranged inside the same device;
- a gyroscope connected to the burner (1) to detect movements of the burner; in this way it is possible to check whether the burner (1) has been tampered with, accidentally moved by wind or animals, or stolen; in this case, ignition of the burner (1) is deactivated to avoid accidents;

- a GPS module to detect the position of the burner (1) and generate an interactive map of the area near the burner (1);
- an internal thermometer arranged inside the burner (1) and suitable for detecting the temperature inside the burner;
- an internal hygrometer arranged inside the burner (1) and suitable for detecting the humidity inside the burner;
- a hygrometer of the control unit arranged in the area of the control unit (U) so as to detect malfunctions of the control unit;
- an anemometer to detect the wind speed;
- an infrared sensor arranged inside the burner (1) to verify ignition of the burner (1);
- a charge level sensor to detect the battery charge of the control unit (U).

The sensors are connected to the control unit (U), so as to transmit information to the control unit (U). Optionally, the sensors communicate via wireless with the control unit (U).

Optionally the control unit (U) comprises a main communication module to communicate with a smart device such as, for example, a computer, a smartphone or a tablet, advantageously provided with a specific application. In particular, the main communication module comprises a telephone SIM card. The main communication module is suitable for sending the information received from the sensors to the smart device so that a user can view said information on the smart device, and for receiving from the smart device settings for operation of the anti-frost device (100). For example, the main communication module is suitable for receiving from the smart device threshold values to be stored in the control unit (U).

Optionally, in addition to the main communication module, the control unit (U) comprises a Bluetooth module to allow the control unit (U) to communicate with the smart device, when the smart device is near the control unit (U), and/or a USB port to connect the smart device such as, for example, a computer, directly to the control unit (U).

Optionally, the control unit (U) is designed to store in a database the information received from the sensors over a period of time so that it can process said information.

The advantages of the anti-frost device (100) according to the invention are evident.

The anti-frost device (100) is inexpensive to produce and space-saving. The burner (1) is arranged at the head of the row of plants and the pipe (2) is connected to the row of plants, therefore the burner (1) and the pipe (2) do not clutter the space behind the row of plants.

Furthermore, the fact that the heated gas, generated by the LPG burner (1), comprises carbon dioxide and water vapour means that the plants can receive carbon dioxide for use in photosynthesis. Furthermore, the water vapour of the heated gas increases the humidity around the plant, thus preventing serious damage to the plants due to frost and/or ice.

The LPG burner (1) has a reduced environmental impact and can be used also for organic crops.

The anti-frost device according to the invention has reduced labour costs and is practical to use, in fact thanks to the control unit, sensors and burner ignition device, the anti-frost device according to the invention can function automatically, also in the absence of an operator physically present in the area of the anti-frost device.

Thanks to the main communication module, a user can view in remote mode the information detected by the sensors, so as to monitor in remote mode the operation of the anti-frost device, and can send to the control unit settings to customise operation of the anti-frost device.

With reference to Fig. 3, the first embodiment of the anti-frost device (100) according to the invention is part of an anti-frost apparatus (300) for preventing damage caused by frost and/or ice on a plurality of rows of plants. The anti-frost apparatus (300) comprises a plurality of anti-frost devices (100). Each anti-frost device (100) is arranged in the area of a row of plants.

In this case, optionally, one of the anti-frost devices (100) is a main anti-frost device and its control unit (U) comprises the main communication module, so that only the control unit (U) of the main anti-frost device communicates with the smart device.

The other anti-frost devices are secondary anti-frost devices. The control unit of all the anti-frost devices (100) comprises a local communication module for communicating with the other anti-frost devices. The local communication module is advantageously of wi-fi type, for example LORA, and is encrypted.

In this way, the control unit (U) of each secondary anti-frost device sends to the control unit (U) of the main anti-frost device the information detected by its sensors via the local communication module. The control unit (U) of the main anti-frost device is designed to send to the smart device the information, received from the secondary anti-frost devices, via the main communication module. The control unit (U) of the main anti-frost device is designed to receive from the smart device the settings via the main communication module. The control unit (U) of the main anti-frost device sends to the control unit (U) of each secondary anti-frost device the settings, received from the smart device, via the local communication module.

Alternatively, the control unit of several anti-frost devices comprises the main communication module for communicating with a smart device.

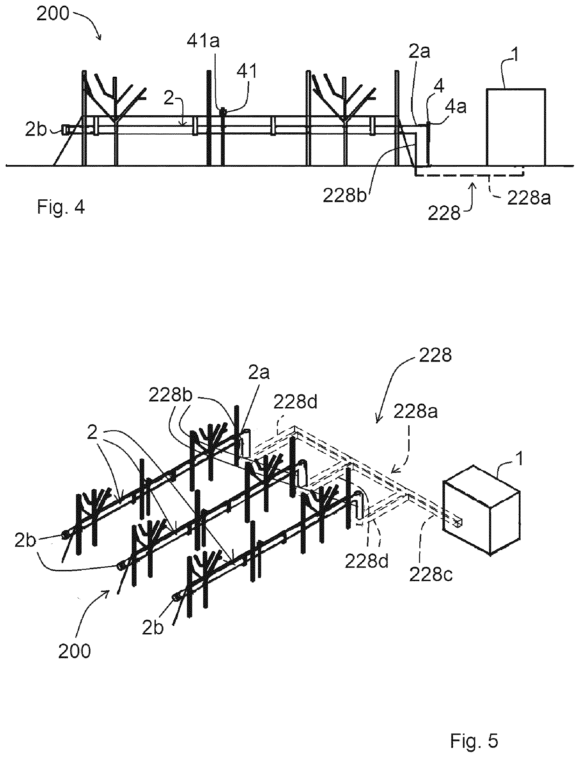

With reference to Fig. 4, a second embodiment of the anti-frost device according to the invention is described, indicated overall by the reference number 200. Elements identical or corresponding to those previously described are indicated by the same reference numbers, omitting the detailed disclosure thereof.

The anti-frost device (200) differs from the first embodiment of the anti-frost device due to the fact that the connection pipe (228), connected to the burner (1) and to the first end (2a) of the horizontal pipe, is at least partially underground.

In this way, the burner (1) can be arranged also in a distal position relative to the row of plants, without the connection pipe obstructing the passage in the area between the burner and the row of plants.

The connection pipe (228) advantageously comprises:
- a first underground section (228a) arranged in a horizontal position and comprising a first end connected to the burner (1) and a second end suitable to be arranged at the head of the row of plants;
- a second external section (228b) arranged in a vertical position and comprising a first end, connected to the second end of the first section (228a) of the connection pipe, and a second end connected to the first end (2a) of the pipe.

With reference to Fig. 5, a variation of the anti-frost device (200) is illustrated, suitable to be installed in the area of a plurality of rows of plants to prevent damage caused by frost and/or ice on said plants. The anti-frost device (200) comprises a plurality of horizontal pipes (2), each suitable to be arranged along one of the rows of plants.

The connection pipe (228) of the anti-frost device (200) advantageously comprises:
- a first underground section (228a) arranged in a horizontal position;
- a plurality of second external sections (228b) connected to the first section (228a) and arranged in a vertical position.

The first section (228a) comprises a first end, connected to the burner (1), and a plurality of second ends, each suitable to be arranged at the head of one of the rows of plants. Optionally, the first section (228a) has a comb-like shape comprising:
- a first portion (228c) connected to the burner and suitable to be arranged perpendicularly to the row of plants;
- a plurality of second portions (228d), each connected to the first portion (228c) and to one of the second sections (228b) of the connection pipe.

Each second vertical section (228b) comprises a first end, connected to one of the second ends of the first horizontal section (228a) of the connection pipe, and a second end connected to the first end (2a) of the pipe (2).

In this way, with one single burner (1) arranged in a distal position relative to the row of plants, it is possible to prevent frost damage on a plurality of rows of plants, without the connection pipe obstructing the passage in the area between the burner and the row of plants.

Although not shown in the figures, the burner can be of any type, for example it can be a methane gas burner or an electric burner. The components of the heated gas vary according to the type of burner. In the case of an electric burner, the burner can be adapted to heat water contained in a tank, so as to generate heated gas comprising water vapour.

Optionally, in addition to the dividing wall, the anti-frost device can comprise several burners positioned in series.

Although not shown in the figures, the anti-frost device can comprise a check valve arranged in the pipe (2) to prevent gas in the pipe (2) from returning towards the burner (1). Advantageously, the anti-frost device comprises one or more gas accumulators, arranged downstream of the burner and upstream of the check valve. Said accumulators are in fluid communication with the pipe, so as to accumulate the heated gas coming from the burner.

Furthermore, the anti-frost device can comprise more than one pipe, connected to the burner, and arranged along the row of plants. For example, the anti-frost device can comprise parallel pipes connected to the same row of plants and arranged at different heights, so as to heat the plants of the row of plants at different heights.

Although not shown in the figures, alternatively or additionally, the fans can be arranged in the connection pipe and/or in the burner.

Modifications or detail variations can be made to the present embodiment of the invention within the reach of a person skilled in the art, and in any case within the scope of the invention expressed by the attached claims.

## Claims

1. An anti-frost device (100, 200) suitable to be installed in the area of at least one row of plants to prevent damage caused by frost and/or ice on said plants; said anti-frost device (100, 200) comprising:
- at least one burner (1) suitable for generating heated gas;
- at least one pipe (2) suitable to be arranged along said at least one row of plants; said at least one pipe (2) being in fluid communication with said at least one burner (1), so that the heated gas generated by said at least one burner (1) flows into said at least one pipe (2);
wherein said at least one pipe (2) comprises:
- holes (20) for outflow of the heated gas from said at least one pipe (2);
- a first end (2a) proximal to said at least one burner (1);
- a second closed end (2b), distal to said at least one burner (1);
**characterised in that**
said at least one pipe (2) comprises a longitudinal dividing wall (21), so that said at least one pipe (2) comprises a first conduit (22) and a second conduit (23); said holes (20) being formed in the area of said second conduit (23); said second conduit (23) being closed by means of a bulkhead (21a) at the first end (2a) of said at least one pipe and communicating with the first conduit (22) at the second end (2b) of said at least one pipe, so that the heated gas coming out of the burner (1) is forced to flow in the first conduit (22) until it reaches the second end (2b) of said at least one pipe, enters the second conduit (23) and flows out of the holes (20) of said at least one pipe.

2. The anti-frost device (100, 200) according to claim 1, wherein said longitudinal dividing wall (21) is arranged in a horizontal position; said second conduit (23) being arranged below said first conduit (22); said holes (20) being formed at the second conduit (23) in a lower portion of a lateral wall of the pipe (2), so that the heated gas flows out from the bottom.

3. The anti-frost device (100, 200) according to claim 1 or 2, comprising at least one fan (3) to push the heated gas along said at least one pipe (2).

4. The anti-frost device (100, 200) according to any one of the claims from 1 to 3, wherein said at least one burner (1) is gas powered.

5. The anti-frost device (100, 200) according to any one of the preceding claims, comprising a check valve arranged in the pipe (2) to prevent the gas in the pipe (2) from returning towards the burner (1).

6. The anti-frost device (100, 200) according to any one of the preceding claims, comprising:
- an external thermometer (4) suitable for detecting the air temperature in the area of said at least one row of plants;
- an external hygrometer (4a) suitable for detecting the humidity of the air in the area of said at least one row of plants;
- an ignition device of the burner (1) to ignite said at least one burner (1);
- a thermocouple (40) for detecting the temperature of the heated gas;
- a control unit (U) connected to said external thermometer (4) and to said external hygrometer (4a) so as to receive from said external thermometer (4) information on the air temperature in the area of said at least one row of plants, and from said at least one external hygrometer (4a) information on the humidity of the air in the area of the row of plants; said control unit (U) being connected to said ignition device of the burner (1) so as to send to said ignition device an activation signal when the temperature detected by said external thermometer (4) is below a threshold value and when the humidity of the air detected by said external hygrometer (4a) is below a threshold value; said control unit (U) being connected to said thermocouple (40) to receive from said thermocouple (40) information on the temperature of the heated gas.

7. The anti-frost device (100, 200) according to claim 6, comprising one or more of the following sensors connected to said control unit (U):
- a secondary thermometer (41) suitable for detecting the air temperature along said at least one row of plants in a different position from the external thermometer (4);
- a secondary hygrometer (41a) suitable for detecting the humidity of the air along said at least one row of plants in a different position from the external hygrometer (4a);
- a gyroscope connected to said at least one burner (1) to detect movements of said at least one burner;
- a GPS module to detect the position of the burner (1) and generate an interactive map of the area near the burner (1);
- an internal thermometer arranged inside said burner (1) and suitable for detecting the temperature inside the burner;
- an internal hygrometer arranged inside said burner (1) and suitable for detecting the humidity inside the burner;
- a hygrometer of the control unit arranged at said control unit (U) so as to detect malfunctions of said control unit;
- an anemometer to detect the wind speed;
- a charge level sensor to detect the charge of a battery of the control unit (U).

8. The anti-frost device (100, 200) according to claim 6 or 7 wherein said control unit (U) comprises a main communication module for communicating with a smart device.

9. The anti-frost device (200) according to any one of the preceding claims, comprising a connection pipe (228) connected to said at least one burner (1) and to said at least one pipe (2); said connection pipe (228) comprising:
- a first section (228a) comprising a first end connected to the burner (1) and at least one second end;
- at least one second section (228b) comprising a first end connected to said at least one second end of the first section (228a) of the connection pipe, and a second end connected to said at least one pipe (2);
wherein said first section (228a) is underground.

10. An anti-frost apparatus (300) for preventing damage caused by frost and/or ice on a plurality of rows of plants; said anti-frost apparatus (300) comprising a plurality of anti-frost devices (100) according to any one of the claims from 1 to 5, wherein each anti-frost device (100) is suitable for being arranged in the area of a row of plants.

11. The anti-frost apparatus (300) according to claim 10, wherein the anti-frost devices (100) comprise a control unit (U); said control unit (U) of the anti-frost devices (100) comprising a local communication module for communicating with the other anti-frost devices (100); the control unit (U) of at least one of the anti-frost devices (100) comprising a main communication module for communicating with a smart device.

## Patentansprüche

1. Eine Frostschutzvorrichtung (100, 200), geeignet, um im Bereich mindestens einer Pflanzenreihe installiert zu werden, um durch Frost und/oder Eis verursachte Schäden an den besagten Pflanzen zu verhindern, wobei die Frostschutzvorrichtung (100, 200). Folgendes umfass:
- mindestens einen Brenner (1), der zur Erzeugung von Heizgas geeignet ist;
- mindestens ein Rohr (2), geeignet, um entlang der besagten mindestens einen Pflanzenreihe angeordnet zu werden; wobei das besagte mindestens eine Rohr (2) in Fluidverbindung mit dem besagten mindestens einen Brenner (1) steht, so dass das von dem besagten mindestens einen Brenner (1) erzeugte Heizgas in das besagte mindestens eine Rohr (2) strömt;
wobei das besagte mindestens eine Rohr (2) Folgendes umfasst:
- Löcher (20) für den Abfluss des erhitzten Gases aus dem besagten mindestens einen Rohr (2);
- ein erstes Ende (2a), das sich in der Nähe des besagten mindestens einen Brenners (1) befindet;
- ein zweites geschlossenes Ende (2b), das sich distal von dem besagten mindestens einen Brenner (1) befindet;
**dadurch gekennzeichnet, dass**
das besagte mindestens eine Rohr (2) eine Längstrennwand (21) aufweist, so dass das besagte mindestens eine Rohr (2) eine erste Leitung (22) und eine zweite Leitung (23) umfasst; wobei die besagten Löcher (20) im Bereich der besagten zweiten Leitung (23) ausgebildet sind; wobei die besagte zweite Leitung (23) mittels einer Scheidewand (21a) am ersten Ende (2a) des besagten mindestens einen Rohrs geschlossen ist und mit der ersten Leitung (22) am zweiten Ende (2b) des besagten mindestens einen Rohrs in Verbindung steht, so dass das aus dem Brenner (1) austretende erhitzte Gas gezwungen wird, in der ersten Leitung (22) zu strömen, bis es das zweite Ende (2b) des besagten mindestens einen Rohrs erreicht, in die zweite Leitung (23) eintritt und aus den Öffnungen (20) des besagten mindestens einen Rohrs austritt.

2. Die Frostschutzvorrichtung (100, 200) gemäß Anspruch 1, wobei die besagte Längstrennwand (21) in einer horizontalen Position angeordnet ist; wobei die besagte zweite Leitung (23) unterhalb der besagten ersten Leitung (22) angeordnet ist; wobei die besagten Löcher (20) an der zweiten Leitung (23) in einem unteren Abschnitt einer Seitenwand des Rohrs (2) ausgebildet sind, so dass das erhitzte Gas von unten ausströmt.

3. Die Frostschutzvorrichtung (100, 200) gemäß Anspruch 1 oder 2, umfassend mindestens einen Ventilator (3), um das erhitzte Gas durch das besagte mindestens eine Rohr (2) zu drücken.

4. Die Frostschutzvorrichtung (100, 200) gemäß einem jeden der Ansprüche von 1 bis 3, wobei der besagte mindestens eine Brenner (1) gasbetrieben ist.

5. Die Frostschutzvorrichtung (100, 200) gemäß einem jeden der vorhergehenden Ansprüche, umfassend ein Rückschlagventil, das in dem Rohr (2) angeordnet ist, um zu verhindern, dass das Gas in dem Rohr (2) zum Brenner (1) zurückströmt.

6. Die Frostschutzvorrichtung (100, 200) gemäß einem jeden der vorhergehenden Ansprüche, umfassend:
- ein externes Thermometer (4), geeignet zur Erfassung der Lufttemperatur im Bereich der besagten mindestens einen Pflanzenreihe;
- ein externes Hygrometer (4a), geeignet, um die Luftfeuchtigkeit im Bereich der besagten mindestens einen Pflanzenreihe zu erfassen;
- eine Zündvorrichtung des Brenners (1), um den besagten mindestens einen Brenner (1) zu entzünden;
- ein Thermoelement (40) zur Erfassung der Temperatur des erhitzten Gases;
- eine Steuereinheit (U), die mit dem externen Thermometer (4) und dem besagten externen Hygrometer (4a) verbunden ist, um von dem besagten externen Thermometer (4) Informationen über die Lufttemperatur im Bereich der besagten mindestens einen Pflanzenreihe und von dem besagten mindestens einen externen Hygrometer (4a) Informationen über den Feuchtigkeitsgehalt der Luft im Bereich der Pflanzenreihe zu erhalten; wobei die besagte Steuereinheit (U) mit der besagten Zündvorrichtung des Brenners (1) verbunden ist, um ein Aktivierungssignal an die besagte Zündvorrichtung zu senden, wenn die von dem besagten externen Thermometer (4) erfasste Temperatur unter einem Schwellenwert liegt und wenn die von dem besagten Hygrometer (4a) erfasste Luftfeuchtigkeit unter einem Schwellenwert liegt; wobei die besagte Steuereinheit (U) mit dem besagten Thermoelement (40) verbunden ist, um von dem besagten Thermoelement (40) Informationen über die Temperatur des erhitzten Gases zu empfangen.

7. Die Frostschutzvorrichtung (100, 200) gemäß Anspruch 6, umfassend einen oder mehrere der folgenden Sensoren, die mit der besagten Steuereinheit (U) verbunden sind:
- ein sekundäres Thermometer (41), geeignet, um die Lufttemperatur entlang der besagten mindestens einen Pflanzenreihe an einer anderen Position als der des externen Thermometers (4) zu erfassen;
- ein sekundäres Hygrometer (41a), geeignet, um die Luftfeuchtigkeit entlang der besagten mindestens einen Pflanzenreihe an einer anderen Position als der des externen Hygrometers (4a) zu erfassen;
- ein Gyroskop, das mit dem besagten mindestens einen Brenner (1) verbunden ist, um Bewegungen von dem besagten mindestens einen Brenner zu erfassen;
- ein GPS-Modul, um die Position des Brenners (1) zu erfassen und eine interaktive Karte des Bereichs in der Nähe des Brenners (1) zu erzeugen;
- ein internes Thermometer, das im Inneren des besagten Brenners (1) angeordnet und geeignet ist, um die Temperatur im Inneren des Brenners zu erfassen;
- ein internes Hygrometer, das im Inneren des besagten Brenners (1) angeordnet und geeignet ist, um die Feuchtigkeit im Inneren des Brenners zu erfassen;
- ein Hygrometer der Steuereinheit, das an der besagten Steuereinheit (U) angeordnet ist, um Fehlfunktionen der besagten Steuereinheit zu erfassen;
- ein Anemometer, um die Windgeschwindigkeit zu erfassen;
- einen Ladezustandssensor, um den Ladezustand einer Batterie der Steuereinheit (U) zu erfassen.

8. Die Frostschutzvorrichtung (100, 200) gemäß Anspruch 6 oder 7 wobei die besagte Steuereinheit (U) ein Hauptkommunikationsmodul zur Kommunikation mit einer intelligenten Vorrichtung umfasst.

9. Die Frostschutzvorrichtung (200) gemäß einem jeden der vorhergehenden Ansprüche, umfassend ein Verbindungsrohr (228), das mit dem besagten mindestens einen Brenner (1) und dem besagten mindestens einen Rohr (2) verbunden ist; wobei das Verbindungsrohr (228) Folgendes umfasst:
- einen ersten Abschnitt (228a), umfassend ein erstes Ende, das mit dem Brenner (1) verbunden ist, und mindestens ein zweites Ende;
- mindestens einen zweiten Abschnitt (228b), umfassend ein erstes Ende, das mit dem besagten mindestens einen zweiten Ende des ersten Abschnitts (228a) des Verbindungsrohrs verbunden ist, und ein zweites Ende, das mit dem besagten mindestens einen Rohr (2) verbunden ist;
wobei der besagte erste Abschnitt (228a) unterirdisch ist.

10. Ein Frostschutzgerät (300) zur Verhinderung von Frost- und/oder Eisschäden an einer Vielzahl von Pflanzenreihen, wobei das besagte Frostschutzgerät (300) eine Vielzahl von Frostschutzvorrichtungen (100) gemäß einem jeden der Ansprüche von 1 bis 5 umfasst, wobei jede Frostschutzvorrichtung (100) geeignet ist, um im Bereich einer Pflanzenreihe angeordnet zu werden.

11. Das Frostschutzgerät (300) gemäß Anspruch 10, wobei die Frostschutzvorrichtungen (100) eine Steuereinheit (U) umfassen; wobei die besagte Steuereinheit (U) der Frostschutzvorrichtungen (100) ein lokales Kommunikationsmodul zur Kommunikation mit den anderen Frostschutzvorrichtungen (100) umfasst; wobei die Steuereinheit (U) von mindestens einer der Frostschutzvorrichtungen (100) ein Hauptkommunikationsmodul zur Kommunikation mit einer intelligenten Vorrichtung umfasst.

## Revendications

1. Dispositif antigel (100, 200) destiné à être installé dans la zone d'au moins une rangée de plantes afin de prévenir les dommages causés par le gel et/ou la glace sur lesdites plantes ; ledit dispositif antigel (100, 200) comprenant :
- au moins un brûleur (1) apte à produire du gaz chauffé ;
- au moins un tuyau (2) apte à être disposé le long de ladite au moins une rangée de plantes ; ledit au moins un tuyau (2) étant en communication fluide avec ledit au moins un brûleur (1), de sorte que le gaz chauffé généré par ledit au moins un brûleur (1) s'écoule dans ledit au moins un tuyau (2) ;
où ledit au moins un tuyau (2) comprend :
- des trous (20) pour l'écoulement du gaz chauffé depuis ledit au moins un tuyau (2) ;
- une première extrémité (2a) proximale dudit au moins un brûleur (1) ;
- une deuxième extrémité fermée (2b), distale dudit au moins un brûleur (1) ;
**caractérisé par le fait que**
ledit au moins un tuyau (2) comprend une paroi de séparation longitudinale (21), de sorte que ledit au moins un tuyau (2) comprend un premier conduit (22) et un second conduit (23) ; lesdits trous (20) étant formés dans la zone dudit second conduit (23) ; ledit second conduit (23) étant fermé au moyen d'une cloison (21a) à la première extrémité (2a) dudit au moins un tuyau et communiquant avec le premier conduit (22) à la seconde extrémité (2b) dudit au moins un tuyau, de sorte que le gaz chauffé sortant du brûleur (1) est forcé de circuler dans le premier conduit (22) jusqu'à ce qu'il atteigne la seconde extrémité (2b) dudit au moins un tuyau, pénètre dans le second conduit (23) et s'écoule hors des orifices (20) dudit au moins un tuyau.

2. Dispositif antigel (100, 200) selon la revendication 1, où ladite paroi de séparation longitudinale (21) est disposée en position horizontale ; ledit second conduit (23) étant disposé sous ledit premier conduit (22) ; lesdits trous (20) étant formés au niveau du second conduit (23) dans une partie inférieure d'une paroi latérale du tuyau (2), de sorte que le gaz chauffé s'écoule par le bas.

3. Dispositif antigel (100, 200) selon la revendication 1 ou 2, comprenant au moins un ventilateur (3) pour pousser le gaz chauffé le long dudit au moins un tuyau (2).

4. Dispositif antigel (100, 200) selon l'une des revendications de 1 à 3, où ledit au moins un brûleur (1) fonctionne au gaz.

5. Dispositif antigel (100, 200) selon l'une des revendications précédentes, comprenant un clapet anti-retour disposé dans le tuyau (2) pour empêcher le gaz dans le tuyau (2) de retourner vers le brûleur (1).

6. Dispositif anti-gel (100, 200) selon l'une des revendications précédentes, comprenant :
- un thermomètre externe (4) apte à détecter la température de l'air dans la zone de ladite au moins une rangée de plantes ;
- un hygromètre externe (4a) apte à détecter l'humidité de l'air dans la zone de ladite au moins une rangée de plantes ;
- un dispositif d'allumage du brûleur (1) pour allumer ledit au moins un brûleur (1) ;
- un thermocouple (40) pour détecter la température du gaz chauffé ;
- une unité de contrôle (U) connectée audit thermomètre externe (4) et audit hygromètre externe (4a) de manière à recevoir dudit thermomètre externe (4) des informations sur la température de l'air dans la zone de ladite au moins une rangée de plantes, et dudit au moins un hygromètre externe (4a) des informations sur l'humidité de l'air dans la zone de la rangée de plantes ; ladite unité de contrôle (U) étant connectée audit dispositif d'allumage du brûleur (1) de manière à envoyer audit dispositif d'allumage un signal d'activation lorsque la température détectée par ledit thermomètre externe (4) est inférieure à une valeur seuil et lorsque l'humidité de l'air détectée par ledit hygromètre externe (4a) est inférieure à une valeur seuil ; ladite unité de contrôle (U) étant connectée audit thermocouple (40) pour recevoir dudit thermocouple (40) des informations sur la température du gaz chauffé.

7. Dispositif antigel (100, 200) selon la revendication 6, comprenant un ou plusieurs des capteurs suivants connectés à ladite unité de contrôle (U) :
- un thermomètre secondaire (41) apte à détecter la température de l'air le long de ladite au moins une rangée de plantes dans une position différente du thermomètre externe (4) ;
- un hygromètre secondaire (41a) apte à détecter l'humidité de l'air le long de ladite au moins une rangée de plantes dans une position différente de celle de l'hygromètre externe (4a) ;
- un gyroscope relié audit au moins un brûleur (1) pour détecter les mouvements dudit au moins un brûleur ;
- un module GPS pour détecter la position du brûleur (1) et générer une carte interactive de la zone proche du brûleur (1) ;
- un thermomètre interne disposé à l'intérieur dudit brûleur (1) et apte à détecter la température à l'intérieur du brûleur ;
- un hygromètre interne disposé à l'intérieur dudit brûleur (1) et apte à détecter l'humidité à l'intérieur du brûleur ;
- un hygromètre de l'unité de commande disposé sur ladite unité de commande (U) afin de détecter les dysfonctionnements de ladite unité de commande ;
- un anémomètre pour détecter la vitesse du vent ;
- un capteur de niveau de charge pour détecter la charge d'une batterie de l'unité de commande (U).

8. Dispositif antigel (100, 200) selon la revendication 6 ou 7, où ladite unité de commande (U) comprend un module de communication principal pour communiquer avec un dispositif intelligent.

9. Dispositif antigel (200) selon l'une quelconque des revendications précédentes, comprenant un tuyau de raccordement (228) relié audit au moins un brûleur (1) et audit au moins un tuyau (2) ; ledit tuyau de raccordement (228) comprenant :
- une première section (228a) comprenant une première extrémité reliée au brûleur (1) et au moins une deuxième extrémité ;
- au moins une deuxième section (228b) comprenant une première extrémité connectée à ladite au moins une deuxième extrémité de la première section (228a) du tuyau de connexion, et une deuxième extrémité connectée à ladite au moins une conduite (2) ;
où ladite première section (228a) est souterraine.

10. Appareil antigel (300) pour prévenir les dommages causés par le gel et/ou la glace sur une multitude de rangées de plantes ; ledit dispositif antigel (300) comprenant une multitude de dispositifs antigel (100) selon l'une des revendications de 1 à 5, où chaque dispositif antigel (100) est apte à être disposé dans la zone d'une rangée de plantes.

11. Appareil antigel (300) selon la revendication 10, dans lequel les dispositifs antigel (100) comprennent une unité de commande (U) ; ladite unité de commande (U) des dispositifs antigel (100) comprenant un module de communication locale pour communiquer avec les autres dispositifs antigel (100) ; l'unité de commande (U) d'au moins un des dispositifs antigel (100) comprenant un module de communication principale pour communiquer avec un dispositif intelligent.
